# EUROPEAN PATENT SPECIFICATION

(11) **EP 2 324 713 B1**
(45) Date of publication and mention of the grant of the patent: **04.01.2017**
(21) Application number: 09176792.1
(22) Date of filing: 23.11.2009
(51) Int. Cl.: A21C 15/04, A21C 11/12

(54) **Device for clamping a dough piece during a cutting operation**
Vorrichtung zum Klammern eines Teigstücks während eines Schneidvorgangs
Dispositif de fixation d'une pièce de pâte durant une opération de découpage

(43) Date of publication of application: 25.05.2011
(73) Proprietor: Radie B.V., 4104 BC Culemborg (NL)
(72) Inventor: Van Blokland, Johannes, Josephus, Antonius, 4112 JH, Beusichem (NL)
(74) Representative: van Oeffelt, Abraham

(56) References cited:
- BE-A- 665 797
- DE-A1- 19 826 114
- DE-C- 157 091
- DE-U1- 29 921 519
- US-A1- 2003 079 350
- US-B1- 6 318 225

## Description

The present invention relates to a device for clamping a dough piece during a cutting operation. Such a device is known from document DE157091. More in particular, the invention relates to a device for clamping a baguette during a cutting operation, for example in order to fill the baguette in a subsequent or later process step, with butter or the like.

For the purpose of cutting dough pieces, it is known in the art to retain a baguette's position is retained by pressing the baguette onto pins on the carrier that penetrate the product, leaving behind a number of holes in the bottom of the product that is undesired. The pins are fixed to the product carrier, but in practice regularly break off the carrier and end up in a product. Along with the pins the current art carrier also has guides (non movable clamps) on the side with apertures to further guide the baguettes. These guides along with the pins form the fixation means for the baguette to the carrier. Due to play in the mechanism these guides will in time coincide with the cutting region of the cutting tools causing damage of tools.

In the art, difficulties occur when dough pieces are guided along cutting tools, since the cutting tools hit the pins or guides from time to time, resulting in material scratched or cut from the clamps falling on the dough products, which is evidently undesired. This problem occurs even more when the dough pieces need to be cut in an angle that is not perpendicular or tangent to their own form or dimensions. According to the art, dough clamps are rotated for that purpose during transport of the dough pieces. The dough pieces are taken from a baking plate where they are in a straight angle (mostly perpendicular to a direction of further conveyance) and rotated by the clamps, which are thereto for example driven by chains. A disadvantage is that play occurs on the clamps after some time, causing the exact angle to drift, with the above described problems as a result.

The German Patent DE 157 091 describes a device for cutting rectangular parts from a dough piece. The device can only deal with one dough piece at a time. The American Patent Application US 2003 079350 describes a device for cutting hot dogs. This device does not transport dough pieces towards cutting tools, since the knifes used for the cutting are inside the device.

It is a purpose of the present invention to take away the above problems, or at least to provide a useful alternative. More in particular, the invention aims to eliminate the use of pins and the damaging of tools caused by mechanic play, reducing the chance of metal parts ending up in the product and reducing maintenance costs.

The invention therefor proposes a device for clamping a dough in accordance with claim 1.

By providing movable clamping parts with respect to each other the device is suitable for variations in the dimensions of the dough piece, and/or for various dough pieces. After a dough piece has been inserted in between the clamping parts, the clamping parts can be moved towards each other, to clamp the dough piece. The dough piece may be raw dough, but preferably it is at least partly baked, or fully baked, in order to clamp it more easily, and to make proper cuts in it. A simple and robust construction is obtained when the clamping parts are arranged rotatable with respect to each other, and since the entire device does not need to be rotated during its movement, no play occurs, and the undesired effect of cutting tools hitting the clamps from time to time, resulting in material scratched or cut from the clamps falling on the dough products, is solved.

The device according to the invention is arranged mutually movable with respect to cutting tools, such as a translating or rotating saw. That is, the clamping device may be movable with respect to cutting tools at a fixed position, or the cutting tools may be arranged movable with respect to a fixed clamping device, or both may be arranged movable. In case the clamping parts are arranged movable, several clamping devices may be moved in series along the same cutting tools, for example coupled or arrange in a chain. Preferably, the direction of movement corresponds to the (desired) cutting direction, so the cutting tools do not have to move along with the clamping device, or the clamping device does not have to be stopped during a cutting operation on a clamped dough piece.

To hold the dough piece such that it has few chance to move during clamping, the pair of clamping parts extends in a direction at an angle between 0 and 90 degrees with the cutting direction, more in particular between 30 and 60 degrees, evidentially dependent on an angle of the cut to be made with respect to the dimensions of the dough piece. When the pair of apertures is oriented at the same angle with respect to the direction from the first and the second clamping part, the cutting tool can be moved through the apertures without touching, hitting or scratching the clamping device. In particular the pair of apertures is arranged behind each other in the direction of movement of the clamping device.

Since the clamping parts may get in the way of the cutting tool when they are moved toward or away from each other to such extend that the material of the clamping part adjacent to the aperture gets in the path of the cutting tool, the device according to the invention preferentially comprises a limiter for limiting the mutual movement of the clamping parts to such extend, that a path for the cutting tools through the apertures stays available.

In a preferred embodiment, the mutual movement of the clamping parts is coupled to the mutual movement of the device and the cutting tools. This may be done by controlling the actuation means in dependence of the distance to the cutting tools. In a practical realisation, a guidance rail or bar may be arranged along the path of the clamping device, that operates the actuation means, for example formed by a lever, in the vicinity of the cutting tools to ensure that the apertures are outlined with the cutting tool. For certain applications of dough pieces, several parallel cuts must be made, for example a baguette to be pre-cut for use, or to be filled with butter for example. Thereto, the device may comprise a plurality of apertures, and a plurality of cutting tools with parallel cutting surfaces. Evidently, the pairs of cutting tools should be arranged in parallel too, and at the same mutual distances as corresponding cutting tools. The clamping parts may be forced in a default position, for example by a spring or like means. Said spring may also serve to force the actuation means against the guidance rail or bar.

The invention will now be elucidated in more detail with reference to the following figures, wherein:
- Figure 1 shows a device for clamping a dough piece;
- Figure 2 shows the device from figure 1 in a perspective top view;
- Figure 3 shows the configuration from figure 2, with cutting tools;
- Figure 4 shows a baguette in the device in a front view; and
- Figure 5 shows another to view of the device with a loading device.

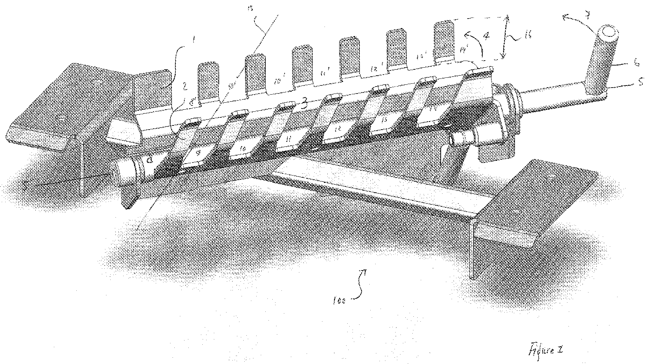

Figure 1 shows a device 100 according to the present invention for clamping a dough piece (not shown), during a cutting operation. The device comprises a first clamping part 1 and a second clamping part 2, extending essentially parallel to each other. The second clamping part 2 is movable in the direction of the arrow 4 around an axis 5, with respect to the first dough part 1 for adjusting the width of the space 3 in between to fit a dough piece. The movement can be made by actuation means embodied by lever 6, which can be rotated around axis 5 in the direction or arrow 7. Apart from for moving the clamping parts towards and/or from each other by rotation, other ways of movement, such as translating the clamping parts 1, 2, may be used. The device comprises a plurality of apertures 8-14, 8'-14', that form pairs (1-1', 2-2', 3-3', ...) of apertures, each pair for enabling cutting tools (not depicted) to cut a dough piece in the clamp at least partially. The cutting tools can be moved through the apertures. Path 15 shows a direction of relative movement of the cutting tools through apertures 9, 9'. This movement can be made by moving the cutting tools, or by moving the device 100 according to the present invention. The cutting tools do not necessarily extend through the entire height 16 of the apertures in all cases. It may also be desired that the dough piece is only cut partly, and remains one piece, so that it can be broken or cut by a consumer, or so that a filling, such as butter can be added.

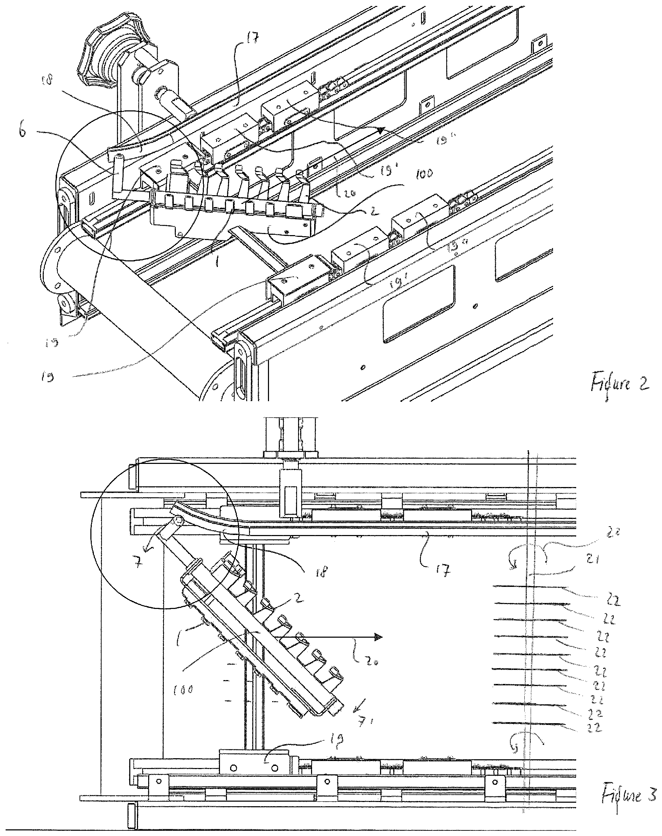

Figure 2 shows the device 100 from figure 1 in a perspective top view, where it is placed on drive means 19. The drive means 19 are coupled in a chain with drive means 19' and 19" and further (non depicted) drive means, which translate the device 100 in the direction of arrow 20. During the translation, the lever 6 of the device 100 that operates the clamping parts 1 and 2 is guided along a track 17, which has a curved end 18 to smoothly operate the lever, in order to clamp a dough piece when the device 100 is moved along the track 18 towards the (non depicted) cutting tools.

Figure 3 shows a top view of the configuration from figure 2, wherein furthermore cutting tools are shown, formed by cutting blades 22 arranged rotatably around shaft 21, around which they can be rotated in the direction of arrow 22, or the other way round. When the clamping parts 1 ad 2 are in the closed position that is taken in when the device 100 is moved in the direction of the arrow 20, the cutting blades 22 go through the corresponding apertures in the device 100.

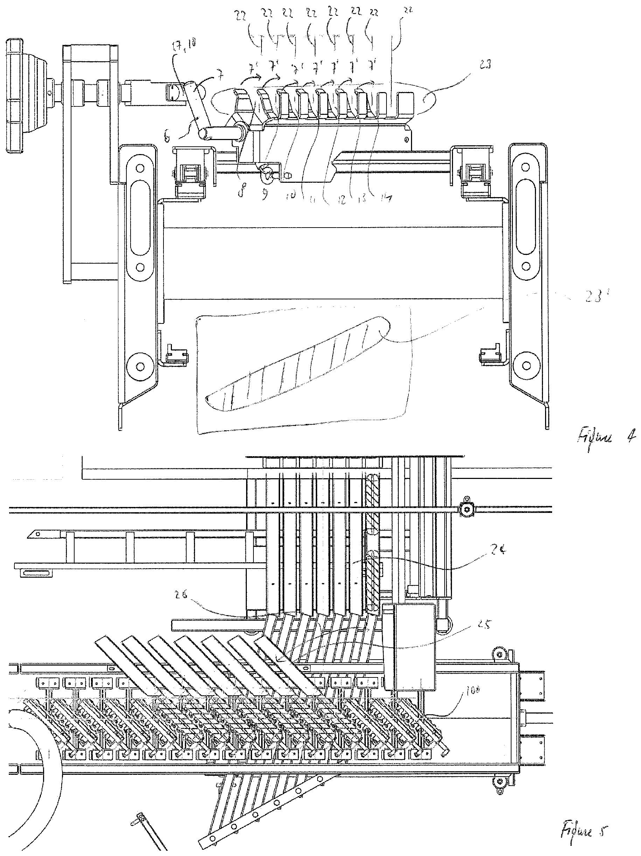

Figure 4 shows a baguette 23 in the device 100 in a front view. It is shown how the apertures 8-14 become 7' outlined once the lever 6 is turned 7 due to movement along the guidance 17, 18. The cutting blades 22 can then pass through the apertures and cut the baguette 23. A top view of the result 23a is shown below in figure 4. The thus processed baguette can in a next step for example be filled with butter.

Figure 5 shows another to view of the device 100, together with a loading device 25, which is configured to rotate along curve 26, for picking up dough pieces from a first conveyor 24, and putting them on a second coveyor, comprising the device 100.

## Claims

1. Device (100) for cutting dough pieces, in particular baguettes, comprising:
- cutting tools (22), such as a translating or rotating saw; having a cutting direction;
- at least one clamping device, mutually movable with respect to the cutting tools (22) in the cutting direction, the clamping device comprising:
• a first and a second clamping part (1, 2),
▪ extending in a direction at an angle between 0 and 90, and in particular 30 and 60 degrees with the cutting direction;
▪ movable with respect to each other for adjusting the width of the space to fit the dough piece;
▪ defining a space (3) for the dough piece in between them,
▪ comprising at least one pair of apertures (8-14), arranged behind each other in the direction of movement, for enabling cutting tools to cut a dough piece in the clamp at least partially;
• actuation means (6), for moving the clamping parts (1,2) towards and/or from each other.

2. Device according to claim 1, comprising a plurality of cutting tools (22) with parallel cutting surfaces, wherein the at least one clamping device (1, 2) comprises a plurality of apertures, at the same mutual distances as the parallel cutting surfaces.

3. Device according to claim 1 or 2, comprising a plurality of clamping devices (1,2) coupled or arranged in a chain.

4. Device according to any of the preceding claims, comprising a limiter for the mutual movement of the clamping devices (1,2) to such extend, that a path for the cutting tools (22) through the apertures (8-14) stays available.

5. Device according to any of the preceding claims, wherein the mutual movement of the clamping parts (1, 2) is coupled to the mutual movement of the device and the cutting tools (22), by a lever (6) for mutually moving the clamping parts (1, 2) which is guided along a track which extends in the direction of movement.

## Patentansprüche

1. Vorrichtung (100) zum Schneiden von Teigstücken, insbesondere Baguettes, umfassend:
- Schneidwerkzeuge (22), wie etwa eine translatierende oder rotierende Säge; mit einer Schneiderichtung;
- wenigstens eine bezüglich der Schneidwerkzeuge (22) in Schneiderichtung gegenseitig bewegbare Klemmvorrichtung, wobei die Klemmvorrichtung Folgendes umfasst:
• ein erstes und ein zweites Klemmteil (1, 2),
- die sich in eine Richtung in einem Winkel zwischen 0 und 90 Grad und insbesondere zwischen 30 und 60 Grad mit der Schneiderichtung erstrecken;
- die zur Einstellung der Breite des Raums zur Einpassung des Teigstücks in Bezug zueinander bewegbar sind;
- die einen Raum (3) für das Teigstück zwischen sich definieren,
- die wenigstens ein Paar von Öffnungen (8-14) umfassen, die hintereinander in der Bewegungsrichtung angeordnet sind, damit Schneidwerkzeuge ein Teigstück in der Klemme wenigstens teilweise schneiden können;
• Betätigungsmittel (6) zur Bewegung der Klemmteile (1, 2) aufeinander zu und/oder voneinander weg.

2. Vorrichtung nach Anspruch 1, umfassend eine Vielzahl von Schneidwerkzeugen (22) mit parallelen Schneideflächen, wobei die wenigstens eine Klemmvorrichtung (1, 2) eine Vielzahl von Öffnungen in den gleichen gegenseitigen Abständen wie die parallelen Schneideflächen umfasst.

3. Vorrichtung nach Anspruch 1 oder 2, umfassend eine Vielzahl von Klemmvorrichtungen (1, 2), die in einer Kette miteinander verbunden oder angeordnet sind.

4. Vorrichtung nach einem der vorhergehenden Ansprüche, umfassend ein Begrenzungsmittel für die gegenseitige Bewegung der Klemmvorrichtung (1, 2) in einem solchen Ausmaß, dass ein Weg für die Schneidwerkzeuge (22) durch die Öffnungen (8-14) vorhanden bleibt.

5. Vorrichtung nach einem der vorhergehenden Ansprüche, wobei die gegenseitige Bewegung der Klemmteile (1, 2) mit der gegenseitigen Bewegung der Vorrichtung und der Schneidwerkzeuge (22) über einen Hebel (6) gekoppelt ist, zur gegenseitigen Bewegung der Klemmteile (1, 2), die entlang einer sich in Bewegungsrichtung erstreckenden Bahn geführt wird.

## Revendications

1. Dispositif (100) pour découper des morceaux de pâte, en particulier des baguettes, comprenant :
- des outils de coupe (22) tels qu'une scie de translation ou une scie rotative ; ayant une direction de coupe ;
- au moins un dispositif de serrage, pouvant être déplacé conjointement par rapport aux outils de coupe (22) dans la direction de coupe, le dispositif de serrage comprenant :
- une première et une deuxième partie de serrage (1, 2),
- s'étendant dans une direction suivant un angle compris entre 0 et 90, et en particulier entre 30 et 60 degrés par rapport à la direction de coupe
- déplaçables l'une par rapport à l'autre pour ajuster la largeur de l'espace de manière à y ajuster le morceau de pâte ;
- définissant un espace (3) pour le morceau de pâte entre elles,
- comprenant au moins une paire d'ouvertures (8-14), agencées l'une derrière l'autre dans la direction de mouvement, pour permettre à des outils de coupe de découper un morceau de pâte au moins en partie dans la pince ;
- des moyens d'actionnement (6), pour déplacer les parties de serrage (1, 2) l'une vers l'autre et/ou à l'écart de l'une de l'autre.

2. Dispositif selon la revendication 1, comprenant une pluralité d'outils de coupe (22) avec des surfaces de coupes parallèles, l'au moins un dispositif de serrage (1, 2) comprenant une pluralité d'ouvertures, disposées aux mêmes distances mutuelles que les surfaces de coupe parallèles.

3. Dispositif selon la revendication 1 ou 2, comprenant une pluralité de dispositifs de serrage (1, 2) accouplés ou disposés dans une chaîne.

4. Dispositif selon l'une quelconque des revendications précédentes, comprenant un dispositif de limitation pour le mouvement mutuel des dispositifs de serrage (1, 2) dans une mesure telle qu'une trajectoire pour les outils de coupe (22) à travers les ouvertures (8-14) reste disponible.

5. Dispositif selon l'une quelconque des revendications précédentes, dans lequel le mouvement mutuel des parties de serrage (1, 2) est accouplé au mouvement mutuel du dispositif et des outils de coupe (22) par un levier (6) destiné à déplacer mutuellement les parties de serrage (1, 2), lequel est guidé le long d'une trajectoire qui s'étend dans la direction de mouvement.
